# EUROPEAN PATENT APPLICATION

(11) **EP 4 769 699 A1**
(43) Date of publication of application: **01.07.2026**
(21) Application number: 24866829.5
(22) Date of filing: 16.04.2024
(51) Int. Cl.: H01M 50/184, H01M 50/188, H01M 50/198, H01M 50/553

(54) **BATTERY CELL, BATTERY AND ELECTRIC DEVICE**

(30) Priority: 18.09.2023 CN 202311203328
(71) Applicant: Contemporary Amperex Technology Co., Limited, Ningde, Fujian 352100 (CN)
(72) Inventor: WU, Kai, Ningde, Fujian 352100 (CN); LIN, Denghua, Ningde, Fujian 352100 (CN); CHEN, Wenwei, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2024/088063
(87) International publication number: WO 2025/060404

(57) **Abstract**

A battery cell, a battery and an electric device, which belongs to the technical field of batteries. The battery cell includes a first shell wall, a terminal and an insulating and sealing structure, where the terminal includes a passing portion and a first extending portion; the first extending portion extends to the outside of an outer surface or the inside of an inner surface of the first shell wall; a first corner arranged towards the first shell wall is provided at the connection between the first extending portion and the passing portion; the first shell wall includes a second corner corresponding to the first corner; the insulating and sealing structure is fitted between the first shell wall and the terminal and includes a first part and a second part; and the material hardness of the first part is lower than that of the second part, and the first part is arranged closer to at least one of the first corner and the second corner than the second part.

## Description

### CROSS-REFERENCE TO RELATED APPLICATIONS

The present application is proposed based on and claims priority to Chinese Patent Application No. 202311203328.9, filed on September 18, 2023, which is incorporated herein by reference in its entirety.

### TECHNICAL FIELD

The present application relates to the technical field of batteries, and particularly relates to a battery cell, a battery and an electric device.

### BACKGROUND

In recent years, new energy vehicles have a leapfrog development. In the field of an electric vehicle, a power battery, as a power source of the electric vehicle, plays an irreplaceable and significant role. The power battery includes several battery cells. However, the reliability of the battery cell needs to be improved.

### SUMMARY

Embodiments of the present application provide a battery cell, a battery and an electric device. The reliability of the battery cell may be improved.

In a first aspect, embodiments of the present application provide a battery cell, including a first shell wall, a terminal and an insulating and sealing structure. An installing hole is formed in the first shell wall. The terminal includes a passing portion arranged in the installing hole in a passing manner and a first extending portion connected with the passing portion and extending in a direction far away from a central axis of the installing hole relative to the passing portion, the first extending portion extends to the outside of an outer surface or the inside of an inner surface of the first shell wall, a first corner arranged towards the first shell wall is provided at the connection between the first extending portion and the passing portion, the first shell wall includes a second corner corresponding to the first corner, the insulating and sealing structure is fitted between the first shell wall and the terminal, and includes a first part and a second part, the material hardness of the first part is lower than that of the second part, and the first part is arranged closer to at least one of the first corner and the second corner than the second part.

In the above technical solutions, when the terminal is installed onto the first shell wall, the terminal may exert acting force onto the insulating and sealing structure fitted between the terminal and the first shell wall, so that the insulating and sealing structure extrudes the first shell wall, the first shell wall may exert counter-acting force onto the insulating and sealing structure, the stress of a position of the insulating and sealing structure corresponding to the first corner and/or the second corner is relatively concentrated, and this position is a weak position, and is easy to crack. The insulating and sealing structure is set to include the first part and the second part, the material hardness of the first part is lower than that of the second part, and the first part is arranged closer to at least one of the first corner and the second corner than the second part, so that the insulating and sealing structure uses the softer first part with lower material hardness in the weak position, the first part is easier to deform to absorb the acting force through being stressed and compressed than the second part, the cracking risk of the insulating and sealing structure in the weak position is reduced, the insulating and sealing fitting reliability between the first shell wall and the terminal is favorably improved, and the reliability of the battery cell is improved. In addition, through the arrangement of the second part with the material hardness higher than that of the first part, the second part achieves a supporting effect, so that the compression amount of the insulating and sealing structure may be well controlled to achieve a more effective sealing effect, and the fitting sealing performance between the terminal and the first shell wall is improved.

In some embodiments, the insulating and sealing structure includes a third corner corresponding to the first corner, and the first part includes a first sub-portion arranged closer to the third corner than the second part.

In the above technical solutions, the insulating and sealing structure includes the third corner corresponding to the first corner. When the terminal is assembled and fixed to the first shell wall, the terminal may extrude the insulating and sealing structure, the stress of a position of the insulating and sealing structure in the third corner is relatively great, and this position is easy to crack. Through the arrangement of the softer first sub-portion with lower material hardness than the second part, the first sub-portion is easy to deform to absorb the stress through being stressed and compressed, so that the cracking risk of the insulating and sealing structure at the third corner may be reduced.

In some embodiments, the first sub-portion defines a local outer surface of the third corner.

In the above technical solutions, a position of the first sub-portion near the first corner is exposed out of an outer surface of the insulating and sealing structure, so that the stress compression deformation may well occur, and it will be more beneficial to mitigate the cracking problem in this position through acting force buffering. In addition, through such arrangement, the processing difficulty of the first sub-portion and the second part in a combined manner may be reduced.

In some embodiments, a surface of one side of the insulating and sealing structure towards the first extending portion includes a first face portion defined by the first sub-portion, the surface of one side of the insulating and sealing structure towards the first extending portion further includes a second face portion defined by the second part, and the first face portion exceeds or is flush with the second face portion.

In the above technical solutions, the surface of one side of the insulating and sealing structure towards the first extending portion includes the first face portion defined by the first sub-portion, so that the extruding force from the first extending portion may be well buffered, and the cracking problem of the third corner due to extruding force from the first extending portion may be more effectively mitigated. In addition, the surface of one side of the insulating and sealing structure towards the first extending portion includes the second face portion defined by the second part, so that the second face portion may be used to achieve a supporting effect in the axial direction of the installing hole, the compression amount of the insulating and sealing structure may be well controlled to achieve a more effective sealing effect, and the fitting sealing performance between the terminal and the first shell wall is improved. In addition, the first face portion is not recessed to be lower than the second face portion, so that when the terminal extrudes the third corner position of the insulating and sealing structure, the first face portion may achieve a buffering effect in time without being influenced by the second face portion, the third corner position of the insulating and sealing structure is protected, and the cracking problem in this position is mitigated. In addition, the first face portion exceeds or is flush with the second face portion, so that the processing and design flexibility of the insulating and sealing structure may be improved.

In some embodiments, a surface of one side of the insulating and sealing structure towards the passing portion includes a third face portion defined by the first sub-portion, the surface of one side of the insulating and sealing structure towards the passing portion further includes a fourth face portion defined by the second part, and the third face portion exceeds or is flush with the fourth face portion.

In the above technical solutions, the surface of one side of the insulating and sealing structure towards the passing portion includes the third face portion defined by the first sub-portion, so that the extruding force from the passing portion may be well buffered, and the cracking problem of the third corner due to the extruding force from the passing portion may be effectively mitigated. In addition, the third face portion is not recessed to be lower than the fourth face portion, so that when the terminal extrudes the third corner position of the insulating and sealing structure, the third face portion may achieve a buffering effect in time without being influenced by the fourth face portion, the third corner position of the insulating and sealing structure is protected, and the cracking problem in this position is mitigated. In addition, the third face portion exceeds or is flush with the fourth face portion, so that the processing and design flexibility of the insulating and sealing structure may be improved.

In some embodiments, the insulating and sealing structure includes a fourth corner corresponding to the second corner, and the first part includes a second sub-portion arranged closer to the fourth corner than the second part.

In the above technical solutions, the insulating and sealing structure includes the fourth corner corresponding to the second corner. When the terminal is assembled and fixed to the first shell wall, the terminal may extrude the insulating and sealing structure, the insulating and sealing structure may extrude the first shell wall, the first shell wall may exert counter-acting force onto the insulating and sealing structure, and the counter-acting force received by the insulating and sealing structure at the fourth corner from the second corner of the first shell wall is relatively great, so it is easy to crack. Through the arrangement of the softer second sub-portion with lower material hardness than the second part, after being stressed, the second sub-portion is easy to generate compression deformation to absorb the stress, so that the cracking risk of the insulating and sealing structure at the fourth corner may be reduced.

In some embodiments, the second sub-portion defines a local outer surface of the fourth corner.

In the above technical solutions, a position of the second sub-portion near the second corner is exposed out of an outer surface of the insulating and sealing structure, so that the stress compression deformation may well occur, and it will be more beneficial to mitigate the cracking problem in this position through acting force buffering. In addition, through such arrangement, the processing difficulty of the first sub-portion and the second part in a combined manner may be reduced.

In some embodiments, a fit clearance is formed between the passing portion and the insulating and sealing structure.

In the above technical solutions, the passing portion is not easy to directly extrude the insulating and sealing structure, the acting force transmitted onto the insulating and sealing structure may be further reduced, the damage to the insulating and sealing structure is reduced, and an effect of protecting the insulating and sealing structure is achieved.

In some embodiments, each of the second part and the first part is of an annular structure extending for a whole circle along the circumference direction of the installing hole.

In the above technical solutions, processing and assembly are facilitated, and the cracking problem may be well mitigated.

In some embodiments, the insulating and sealing structure includes a third corner corresponding to the first corner, at least one of the first corner and the third corner forms a chamfer, and/or a fit clearance is formed between the first corner and the third corner.

In the above technical solutions, the extrusion of the first corner on the third corner may be reduced to a certain degree, so that the cracking risk of the insulating and sealing structure at the third corner is reduced.

In some embodiments, the insulating and sealing structure includes a fourth corner corresponding to the second corner, at least one of the second corner and the fourth corner forms a chamfer, and/or a fit clearance is formed between the second corner and the fourth corner.

In the above technical solutions, the extrusion of the second corner on the fourth corner may be reduced to a certain degree, so that the cracking risk of the insulating and sealing structure at the fourth corner is reduced.

In some embodiments, the battery cell includes a first gasket, and the first gasket is arranged between the first extending portion and the insulating and sealing structure.

In the above technical solutions, when the terminal is installed onto the first shell wall, and the first extending portion extrudes the insulating and sealing structure in a direction towards the first shell wall, the first gasket is arranged between the insulating and sealing structure and the first extending portion, so that the first gasket may reduce a part of acting force to reduce the acting force transmitted to the insulating and sealing structure, the damage to the insulating and sealing structure is further reduced, and an effect of protecting the insulating and sealing structure is achieved.

In some embodiments, the battery cell includes a second gasket, the second gasket is arranged between the insulating and sealing structure and a surface of one side of the first shell wall towards the first extending portion, and the material hardness of the second gasket is lower than that of the second part.

In the above technical solutions, when the terminal is installed onto the first shell wall, and the terminal extrudes the insulating and sealing structure in a direction towards the first shell wall, the insulating and sealing structure may conduct the acting force to the second gasket. The second gasket has relatively low material hardness, and may thus generate compression deformation to absorb the acting force, so that the counter-acting force fed back to the insulating and sealing structure may be reduced, the damage to the insulating and sealing structure is reduced, and an effect of protecting the insulating and sealing structure is achieved.

In some embodiments, the terminal forms the first extending portion through flanging and riveting.

In the above technical solutions, the processing of the terminal is convenient, the connection reliability of the first extending portion and the passing portion is favorably improved, and the assembly reliability of the terminal and the first shell wall is improved.

In some embodiments, the passing portion and the first extending portion form a first terminal portion, the insulating and sealing structure includes a first insulating and sealing element fitted between the first terminal portion and the first shell wall, and the first insulating and sealing element consists of a first part and a second part.

In the above technical solutions, the composition of the first insulating and sealing element may be simplified, and the processing of the first insulating and sealing element is convenient.

In some embodiments, the terminal further includes a second extending portion connected with the passing portion and extending in a direction far away from a central axis of the installing hole relative to the passing portion, the second extending portion and the first extending portion respectively extend to the inside and outside of the first shell wall, the passing portion and the second extending portion form a second terminal portion, and the insulating and sealing structure includes a second insulating and sealing element fitted between the second terminal portion and the first shell wall and arranged in a manner of being split from the first insulating and sealing element.

In the above technical solutions, the terminal includes the first extending portion and the second extending portion separately arranged at the inside and outside of the first shell wall, so that the fitting of the terminal and the first shell wall may be more stable, firmer and more reliable. In addition, the insulating and sealing structure includes the first insulating and sealing element and the second insulating and sealing element arranged in a split manner, so that the first insulating and sealing element and the second insulating and sealing element may be respectively and singly installed, the assembly difficulty is reduced, and the insulating and sealing fitting effect of the terminal and each position of the first shell wall may be ensured.

In some embodiments, the terminal includes a terminal body and a terminal cover plate, the terminal body includes the first terminal portion and the second terminal portion, the first extending portion extends to the outside of the outer surface of the first shell wall, the terminal cover plate covers one side of the first terminal portion far away from the second terminal portion, the terminal body is connected with the terminal cover plate through welding, and the material hardness of the second insulating and sealing element is lower than that of the second part.

In the above technical solutions, the material hardness of the second part is higher than that of the second insulating and sealing element, and the second insulating and sealing element is easier to generate compression deformation and has a better sealing effect than the second part. However, the heat resistance capability of the second part is better than that of the second insulating and sealing element, so when the terminal body is welded to the terminal cover plate, the heat influence on the second insulating and sealing element may be possibly reduced, and the sealing reliability between the first shell wall and the terminal may be improved.

In some embodiments, the outer side of the first extending portion towards the first shell wall protrudes out of the passing portion so as to define a sinking groove between the first extending portion and the passing portion, an edge of the terminal cover plate is arranged in the sinking groove, and is welded in a penetrating manner with the passing portion, and a welding structure formed through welding is separated from the first extending portion.

In the above technical solutions, shrinkage stress generated by solidification of a weld pool formed through welding may be blocked by the above interval, and is difficult or less to be conducted to the first extending portion, so that the tilting problem of the first extending portion may be mitigated, the first extending portion may tightly press the insulating and sealing structure, and the insulating and sealing effect may be improved. In addition, the edge of the terminal cover plate is arranged in the sinking groove, is welded with the passing portion in a penetrating manner, but is not in butt welding to the first extending portion, so that the effort of ensuring a small assembling clearance between the edge of the terminal cover plate and the first extending portion to meet the butt welding requirement is not needed, a gap between the edge of the terminal cover plate and the first extending portion may be great, the compatibility of the terminal body is improved, and the processing precision of the terminal cover plate and the terminal body is favorably reduced.

In some embodiments, an accommodating cavity is formed by the battery cell at an inner side of the first shell wall, the terminal includes a terminal body, an accommodating groove open in a direction far away from the accommodating cavity is formed in the terminal body, a communication hole is formed in the terminal body, and the communication hole penetrates through a groove wall of one side of the accommodating groove near the accommodating cavity, and connects the accommodating cavity and the accommodating groove.

In the above technical solutions, when the battery cell is filled with an electrolyte, the electrolyte may be filled into the accommodating groove, and then flows to the accommodating cavity through the communication hole. The accommodating groove may achieve an effect of temporarily storing the electrolyte to mitigate the problems of sputtering, overflowing, and the like of the electrolyte. In addition, a side wall of the accommodating groove may prevent the electrolyte from sputtering out to a certain degree, the pollution caused by the electrolyte on the outside may be reduced, and the fast liquid filling may be conveniently realized. In addition, the single formation of a liquid filling passage on the shell is not needed, so that the special processing on the shell is not needed, and the structure complexity and processing difficulty of the shell are favorably reduced.

In some embodiments, the battery cell includes a battery cell assembly, the battery cell assembly includes an active material coating portion accommodated in the accommodating cavity and a conduction portion connected with the active material coating portion, and the conduction portion is arranged in the communication hole in a penetrating manner to be at least partially accommodated in the accommodating groove.

In the above technical solutions, the conduction portion is at least partially accommodated in the accommodating groove, so that the conduction portion at least partially occupies a space in the accommodating groove, the space occupation of the conduction portion on the accommodating cavity may be reduced, the space in the accommodating cavity may be saved to accommodate the active material coating portion with a greater size, the energy density of the battery cell is favorably improved, or the size of the battery cell may be favorably reduced under the condition of not changing the energy density of the battery cell.

In some embodiments, the terminal includes the terminal cover plate covering the terminal body, a liquid filling hole capable of being communicated with the accommodating groove is formed on the terminal cover plate, and the battery cell further includes a sealing structure for sealing the liquid filling hole.

In the above technical solutions, the liquid filling hole is processed on the terminal cover plate, the hole size is relatively small, and the position is close to the outside, the liquid filling opening may be easily and reliably sealed through a sealing structure, the working reliability of the battery cell is improved, and the flexible and diversified design of the sealing structure may be realized.

In a second aspect, embodiments of the present application further provide a battery, including the battery cell according to any one of the above solutions.

In the above technical solutions, the reliability of the battery cell according to embodiments of the present application is improved, so that the battery performance is favorably improved.

In a third aspect, embodiments of the present application further provides an electric device, including the battery according to any one of the above solutions.

In the above technical solutions, the battery performance is improved, so that the working electric performance of the electric device is favorably improved.

### BRIEF DESCRIPTION OF THE DRAWINGS

To describe the technical solution of embodiments of the present application more clearly, figures to be used in embodiments are briefly introduced below. It is to be understood that the figures described hereafter only show some embodiments of the present application, and shall not be regarded as the limitation to the scope. For a person of ordinary skill in the art, other relevant figures can also be obtained according to these figures without any inventive efforts.
FIG. 1 is a schematic diagram of a structure of a vehicle provided by some embodiments of the present application;
FIG. 2 is an exploded view of a structure of a battery provided by some embodiments of the present application;
FIG. 3 is a schematic diagram of a structure of a battery cell provided by some embodiments of the present application;
FIG. 4 is a schematic orthographic projection diagram of a battery cell provided by some embodiments of the present application;
FIG. 5 is a cross-sectional view along a line A-A in FIG. 4;
FIG. 6 is a local enlarged view of a part B circled in FIG. 5;
FIG. 7 is a local enlarged view of a part C circled in FIG. 6;
FIG. 8 is a local cross-sectional view of a battery cell provided by some embodiments of the present application;
FIG. 9 is a cross-sectional view of an insulating and sealing structure provided by some embodiments of the present application;
FIG. 10 is a local cross-sectional view of a battery cell provided by some embodiments of the present application;
FIG. 11 is a local cross-sectional view of a battery cell provided by some embodiments of the present application;
FIG. 12 is a local cross-sectional view of a battery cell provided by some embodiments of the present application;
FIG. 13 is a local cross-sectional view of a battery cell provided by some embodiments of the present application; and
FIG. 14 is a schematic diagram of fitting of a battery cell and a current collecting component provided by some embodiments of the present application.

Reference numerals: 1000 denotes a vehicle; X denotes a first direction; Y denotes a second direction; Z denotes a third direction; 100 denotes a battery; 200 denotes a controller; 300 denotes a motor; 101 denotes a box body; 1011 denotes a first box body; 1012 denotes a second box body; 102 denotes a battery cell; 103 denotes a current collecting component; 1 denotes a shell; 11 denotes an accommodating cavity; 12 denotes an installing hole; L denotes a central axis; 13 denotes a first shell wall; 131 denotes a second corner; 14 denotes a second shell wall; 2 denotes a terminal; 3 denotes a terminal body; 31 denotes a sinking groove; 32 denotes a first extending portion; 33 denotes a passing portion; 34 denotes a first corner; 35 denotes a first terminal portion; 36 denotes an accommodating groove; 37 denotes a communication hole; 38 denotes a second extending portion; 39 denotes a second terminal portion; 4 denotes a terminal cover plate; 43 denotes a liquid filling hole; 6 denotes a sealing structure; 61 denotes a first sealing element; 62 denotes a second sealing element; 7 denotes a battery cell assembly; 71 denotes an active material coating portion; 72 denotes a conduction portion; 8 denotes an insulating and sealing structure; 81 denotes a third corner; 82 denotes a fourth corner; 83 denotes a first part; 831 denotes a first sub-portion; 8311 denotes a first face portion; 8312 denotes a third face portion; 832 denotes a second sub-portion; 84 denotes a second part; 841 denotes a second face portion; 842 denotes a fourth face portion; 85 denotes a first insulating and sealing element; 86 denotes a second insulating and sealing element; 87 denotes a third insulating and sealing element; 91 denotes a first gasket; and 92 denotes a second gasket.

### DETAILED DESCRIPTION

To describe the purpose, the technical solution and the advantages of embodiments of the present application more clearly, the technical solution of embodiments of the present application will be clearly described hereinafter with reference to the accompanying drawings in embodiments of the present application. Obviously, the described embodiments are only a few, but not all, embodiments of the present application. All other embodiments obtained by a person of ordinary skill in the art based on the embodiments of the present application without making creative efforts shall fall within the protection scope of the present application.

Unless otherwise defined, all technical and scientific terms used in the present application have the same meanings as those usually understood by a person of ordinary skill in the art to which the present application belongs. In the present application, terms used in the specification of the present application are merely intended to describe the specific embodiments, but are not intended to limit the present application. The terms "include" and "have" and any variations of them in the specification, the claims, and the above brief description of the drawings of the present application are intended to cover non-exclusive inclusion. In the specification, the claims, and the above brief description of the drawings of the present application, the terms "first", "second", and so on are intended to distinguish different objects but do not necessarily indicate a specific order or sequence.

Reference to "an embodiment" in the present application means that a particular feature, structure or characteristic described in combination with the embodiment may be included in at least one embodiment of the present application. The appearances of the phrase in various places in the specification are not necessarily all referring to the same embodiment, nor a separate or alternative embodiment that is mutually exclusive of other embodiments.

In the specification of the present application, it should be noted that unless otherwise explicitly specified and limited, the terms "install", "connect", "connection", and "attach" are to be understood in a broad sense. For example, a connection may be a fixed connection, a detachable connection, or an integral connection; or the connection may be a direct connection, an indirect connection through a medium, or internal communication between two components. A person of ordinary skill in the art may understand the specific meanings of the foregoing terms in the present application according to specific situations.

In the present application, the term "and/or" is merely an association relationship to describe associated objects. It can mean that there are three kinds of relationships, for example, A and/or B, may mean three conditions: A exists alone, A and B exist at the same time, and B exists alone. In addition, the character "/" in the present application generally indicates an "or" relationship between the associated objects.

In the embodiments of the present application, the same reference numerals represent the same components, and for brevity, detailed descriptions of the same components are omitted in different embodiments. It is to be understood that the dimensions, such as the thickness, the length, and the width, of various components in embodiments of the present application and the dimensions, such as the entire thickness, the length, and the width of an integrated device shown in the accompanying drawings are merely exemplary descriptions, and shall not be construed as any limitation to the present application.

"Plurality of" appearing in the present application means two or more (including two).

In the present application, a battery cell may include a lithium-ion secondary battery, a lithium-ion primary battery, a lithium-sulfur battery, a sodium-lithium-ion battery, a sodium-ion battery, a magnesium-ion battery, or the like. It is not limited in embodiments of the present application. The battery cell may be in a cylindrical shape, a flat shape, a cuboid shape, or other shapes. It is not limited in embodiments of the present application. Generally, battery cells are divided into three types according to encapsulating methods: cylindrical battery cells, square battery cells and soft package battery cells. It is not limited in embodiments of the present application.

A battery mentioned in embodiments of the present application refers to a single physical module including one or more battery cells to provide a higher voltage and a higher capacity. For example, the battery provided in the present application may include a battery module and a battery pack. The battery module generally includes a plurality of battery cells. The battery pack generally includes a box body for encapsulating one or a plurality of battery cells or one or a plurality of battery modules. The box body may prevent liquid or other foreign objects from affecting the charging or discharging of the battery cells.

The battery cell includes a shell, a battery cell assembly, and an electrolyte. The shell is configured to accommodate the battery cell assembly and the electrolyte. The battery cell assembly includes at least one electrode assembly. The electrode assembly consists of a positive electrode plate, a negative electrode plate, and a separator. The electrode assembly may be of a rolled structure, a laminated structure, etc. The battery cells work mainly relying on the movement of metal ions between the positive electrode plate and the negative electrode plate.

The positive electrode plate may generally include a positive electrode current collector and a positive electrode active material layer, the positive electrode active material layer is directly or indirectly coated onto the positive electrode current collector, the positive electrode current collector not coated with the positive electrode active material layer protrudes out of the positive electrode current collector already coated with the positive electrode active material layer, and the positive electrode current collector not coated with the positive electrode active material layer is used as a positive electrode tab. By taking the lithium-ion battery as an example, a material of the positive electrode current collector may be aluminum, and a material of the positive electrode active material layer may be lithium cobalt oxide, lithium iron phosphate, ternary lithium, lithium manganate, etc.

The negative electrode plate may generally include a negative electrode current collector and a negative electrode active material layer, the negative electrode active material layer is directly or indirectly coated onto the negative electrode current collector, the negative electrode current collector not coated with the negative electrode active material layer protrudes out of the negative electrode current collector already coated with the negative electrode active material layer, and the negative electrode current collector not coated with the negative electrode active material layer is used as a negative electrode tab. A material of the negative electrode current collector may be copper, and a material of the negative electrode active material layer may be carbon, silicon, etc.

To ensure that no fusing occurs when a large current passes, there are a plurality of positive electrode tabs, and the positive electrode tabs are laminated to form a tab portion of the positive electrode, and there are a plurality of negative electrode tabs, and the negative electrode tabs are laminated to form a tab portion of the negative electrode. The shell is provided with terminals, the tab portion of the positive electrode is electrically connected to the terminal of the positive electrode, and the tab portion of the negative electrode is electrically connected to the terminal of the negative electrode. For example, the tab portion may be connected to the terminal, so as to form direct electrical connection between the tab portion and the terminal. For another example, the battery cell assembly may include an adaptor sheet, the tab portion is connected to the adaptor sheet, and the adaptor sheet is connected to the terminal, so as to form indirect electrical connection between the tab portion and the terminal.

A material of the separator is not limited, and may be, for example, polypropylene and polyethylene.

According to some battery cells in the related art, a terminal is installed onto a shell through riveting. To realize the insulating and sealing performance between the shell and the terminal, before the terminal is riveted, an insulating plastic is generally arranged between the terminal and the shell. However, when the terminal is riveted, the terminal may deform through being stressed, and may extrude the insulating plastic, so a weak part of the insulating plastic is easy to crack through being stressed. Once the insulating plastic cracks, the insulating and sealing reliability between the shell and the terminal will be affected, and the reliability reduction of the battery cell will be caused.

Therefore, embodiments of the present application provide a battery cell. The battery cell includes a shell, a terminal and an insulating and sealing structure. The shell includes a first shell wall. An installing hole is formed in the first shell wall. The terminal includes a passing portion arranged in the installing hole in a passing manner and a first extending portion connected with the passing portion and extending in a direction far away from a central axis of the installing hole relative to the passing portion, the first extending portion extends to the outside of an outer surface or the inside of an inner surface of the first shell wall, a first corner arranged towards the first shell wall is provided at the connection between the first extending portion and the passing portion, the first shell wall includes a second corner corresponding to the first corner, the insulating and sealing structure is fitted between the first shell wall and the terminal, and includes a first part and a second part, the material hardness of the first part is lower than that of the second part, and the first part is arranged closer to at least one of the first corner and the second corner than the second part.

Therefore, when the terminal is installed onto the first shell wall, the terminal may exert acting force onto the insulating and sealing structure, the first shell wall may exert counter-acting force onto the insulating and sealing structure, the stress of a position of the insulating and sealing structure corresponding to the first corner and/or the second corner is relatively strong, and this position is a weak position, and is easy to crack. The insulating and sealing structure is set to include the first part and the second part, the material hardness of the first part is lower than that of the second part, and the first part is arranged closer to at least one of the first corner and the second corner than the second part, so that the insulating and sealing structure uses the softer first part with lower material hardness in the weak position, the first part is easier to deform to absorb the acting force through being stressed and compressed than the second part, the cracking risk of the insulating and sealing structure in the weak position is reduced, the insulating and sealing fitting reliability between the first shell wall and the terminal is favorably improved, and the reliability of the battery cell is improved.

Embodiments of the present application provide an electric device using a battery as a power supply. The electric device may be, but is not limited to, a mobile phone, a tablet computer, a notebook computer, an electric toy, an electric tool, an electric bike, an electric automobile, a ship, and a spacecraft. The electric toy may include a fixed or mobile electric toy, for example, a game machine, an electric automobile toy, an electric ship toy, and an electric airplane toy. The spacecraft may include an airplane, a rocket, an aerospace plane, and a spacecraft.

For convenient description in the following embodiments, the following descriptions are provided by taking an electric device of an embodiment of the present application being a vehicle 1000 as an example.

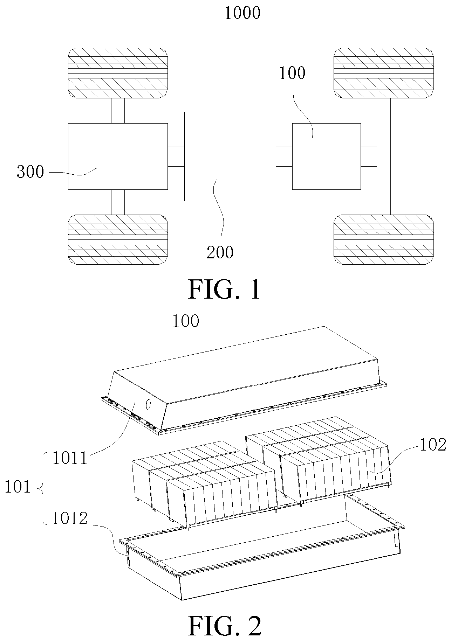

Referring to FIG. 1, FIG. 1 is a schematic diagram of a structure of a vehicle 1000 provided by some embodiments of the present application. The vehicle 1000 may be a fuel powered vehicle, a gas-powered vehicle, or a new energy vehicle. The new energy vehicle may be a pure electric vehicle, a hybrid electric vehicle, or an extended range vehicle, etc. The inside of the vehicle 1000 is provided with a battery 100. The battery 100 may be arranged at the bottom, head, or tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

In some embodiments of the present application, the battery 100 may be used as a power supply for operating the vehicle 1000, and may also be used as a power supply for driving the vehicle 1000, to provide driving power for the vehicle 1000 instead of or partially instead of fuel or natural gas.

Referring to FIG. 2, FIG. 2 is an exploded view of a structure of a battery 100 provided by some embodiments of the present application. The battery 100 includes a box body 101 and a plurality of battery cells 102, and the battery cells 102 are accommodated in the box body 101. The box body 101 is configured to provide an assembly space for the battery cells 102, and the box body 101 may use various structures. In some embodiments, the box body 101 may include a first box body 1011 and a second box body 1012, the first box body 1011 and the second box body 1012 are covered with each other, and an assembly space for accommodating the battery cells 102 is jointly defined by the first box body 1011 and the second box body 1012. The second box body 1012 may be of a hollow structure with an open end. The first box body 1011 may be of a plate-shaped structure, and the first box body 1011 covers the open side of the second box body 1012 so that an assembly space is jointly defined by the first box body 1011 and the second box body 1012. Each of the first box body 1011 and the second box body 1012 may also be of a hollow structure with an open side, and the open side of the first box body 1011 covers the open side of the second box body 1012. Of course, the box body 101 formed by the first box body 1011 and the second box body 1012 may be in various shapes, for example, a cylindrical shape and a cuboid shape.

In the battery 100, the plurality of battery cells 102 may be in series connection or parallel connection or parallel-series connection, and the parallel-series connection refers to that some of the plurality of battery cells 102 are in series connection, and some of the battery cells are in parallel connection. The plurality of battery cells 102 may be directly in series connection or parallel connection or parallel-series connection, and then, the whole formed by the plurality of battery cells 102 is accommodated in the box body 101. Of course, the battery 100 may be formed by firstly forming the plurality of battery cells 102 into a form of a battery module through series connection or parallel connection or parallel-series connection, then forming the plurality of battery modules into a whole through series connection or parallel connection or parallel-series connection, and accommodating the whole into the box body 101. The battery 100 may also include other structures, for example, the battery 100 may also include a current collecting component for achieving the electrical connection among the plurality of battery cells 102.

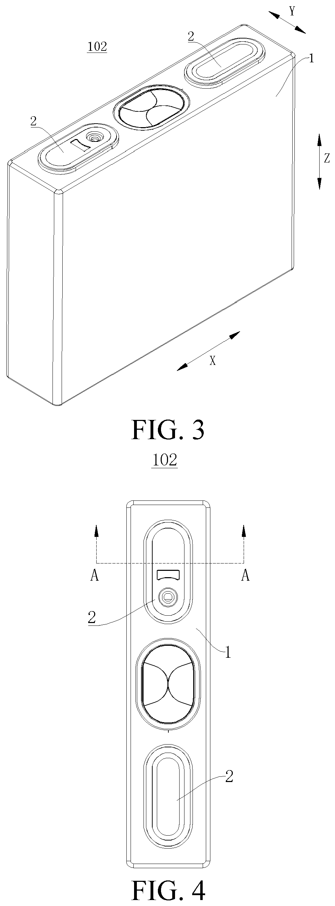

Each battery cell 102 may be a secondary battery or a primary battery, and may further be a lithium-sulfur battery, a sodium-ion battery, or a magnesium-ion battery, but it is not limited thereto. The battery cell 102 may be in a cylindrical shape, a flat shape, a cuboid shape, etc. For example, referring to an embodiment as shown in FIG. 3, the length direction of the battery cell 102 is a first direction X, the width direction of the battery cell 102 is a second direction Y, the height direction of the battery cell 102 is a third direction Z, and the first direction X, the second direction Y and the third direction Z are perpendicular to each other in pairs.

In some embodiments of the present application, in combination with FIG. 3 to FIG. 6, the battery cell 102 includes a shell 1 and terminals 2, the terminals 2 are arranged in the shell 1, and an accommodating cavity 11 is formed inside the shell 1. Exemplarily, the battery cell 102 includes a battery cell assembly 7, the battery cell assembly 7 may include an active material coating portion 71 and a conduction portion 72 connected with the active material coating portion 71, the active material coating portion 71 is accommodated in the accommodating cavity 11, and the conduction portion 72 is welded to the terminal 2 so that the conduction portion 72 is electrically connected between the active material coating portion 71 and the terminal 2.

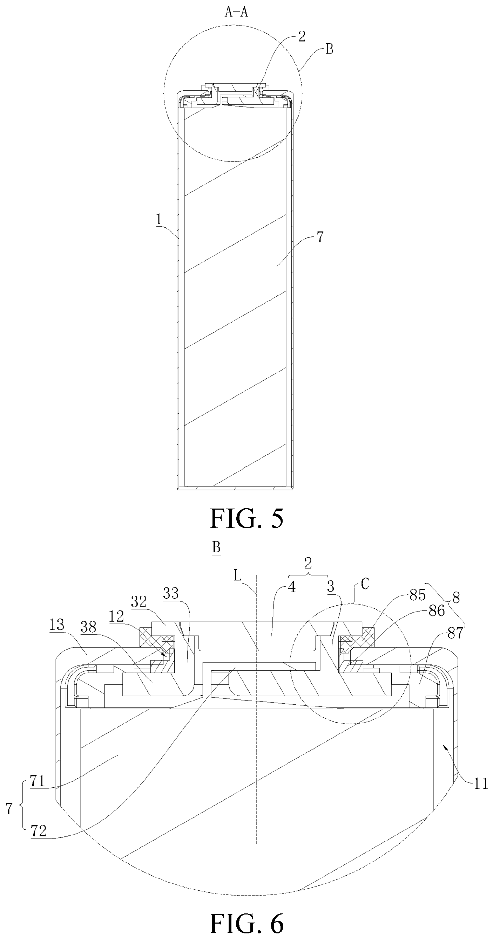

In combination with FIG. 5 and FIG. 6, the shell 1 includes a first shell wall 13, installing holes 12 are formed on the first shell wall 13, and the terminal 2 is arranged in the corresponding installing hole 12 in a penetrating manner to be installed on the first shell wall 13. The terminal 2 includes a passing portion 33 and a first extending portion 32, the passing portion 33 is arranged in the installing hole 12 in a penetrating manner, that is, the passing portion 33 is at least partially positioned in the installing hole 12, uses the axial direction of the installing hole 12 as the projection direction, and uses a plane perpendicular to the axial direction of the installing hole 12 as the projection plane, and the projection of the passing portion 33 on the projection plane falls in a projection scope of the installing hole 12 on the projection plane, so that the effect of penetrating the passing portion 33 in the installing hole 12 may be achieved.

In combination with FIG. 5 and FIG. 6, the first extending portion 32 is connected with the passing portion 33, and extends in a direction far away from the central axis L of the installing hole 12 relative to the passing portion 33, and the first extending portion 32 extends to the outside of an outer surface or the inside of an inner surface of the first shell wall 13. The two side surfaces of the first shell wall 13 in the thickness direction are respectively the outer surface and the inner surface, the inner surface is the surface of the side of the first shell wall 13 towards the accommodating cavity 11, the outer surface is the surface of the side of the first shell wall 13 far away from the accommodating cavity 11, the side of the outer surface far away from the accommodating cavity 11 is the outside of the outer surface, and the side of the inner surface towards the accommodating cavity 11 is the inside of the inner surface. "The first extending portion 32 extends to the outside of an outer surface or the inside of an inner surface of the first shell wall 13" refers to that the first extending portion 32 is at least partially right against the first shell wall 13, the axial direction of the installing hole 12 is used as the projection direction, the plane perpendicular to the axial direction of the installing hole 12 is used as the projection plane, there is an intersection region between the projection of the first extending portion 32 on the projection plane and the projection of the first shell wall 13 on the projection plane, and the part of the first extending portion 32 corresponding to the intersection region is right against the first shell wall 13.

In combination with FIG. 5 and FIG. 6, the battery cell 102 further includes an insulating and sealing structure 8 fitted between the first shell wall 13 and the terminal 2. That is, the insulating and sealing structure 8 is at least partially clamped between the first shell wall 13 and the terminal 2, so that the terminal 2 and the first shell wall 13 are in indirect fit through the insulating and sealing structure 8, and the insulation and sealing between the first shell wall 13 and the terminal 2 may be realized.

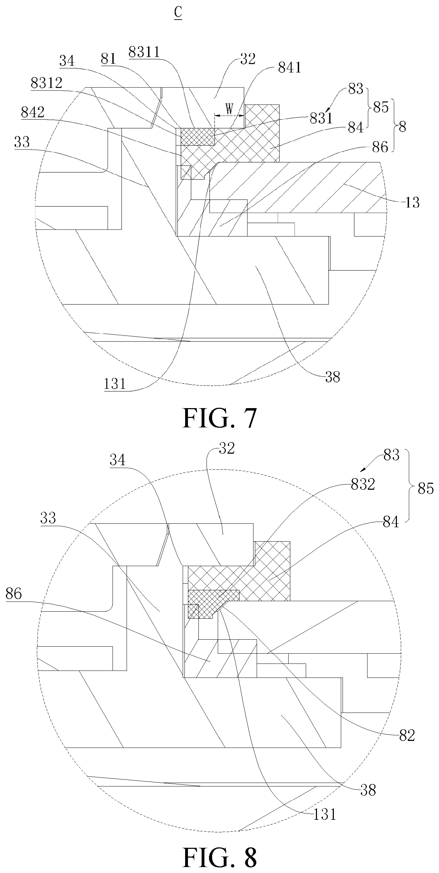

As shown in FIG. 6 and FIG. 7, a first corner 34 arranged towards the first shell wall 13 is provided at the connection between the first extending portion 32 and the passing portion 33. That is, the side of the connection of the first extending portion 32 and the passing portion 33 near the first shell wall 13 forms the first corner 34. The first shell wall 13 includes a second corner 131 corresponding to the first corner 34. That is, the corner of the first shell wall 13 near the first corner 34 is the second corner 131. The insulating and sealing structure 8 includes a first part 83 and a second part 84. The material hardness of the first part 83 is lower than that of the second part 84, and the first part 83 is arranged closer to at least one of the first corner 34 and the second corner 131 than the second part 84. That is, the first part 83 may be totally arranged closer to the first corner 34 than the second part 84, or the first part 83 may be totally arranged closer to the second corner 131 than the second part 84, or the first part 83 may be partially arranged closer to the first corner 34 than the second part 84, and at the same time, the other part of the first part 83 is arranged closer to the second corner 131 than the second part 84.

In embodiments of the present application, when the terminal 2 is installed onto the first shell wall 13, the terminal 2 may exert acting force onto the insulating and sealing structure 8 fitted between the terminal 2 and the first shell wall 13, the stress of a position of the insulating and sealing structure 8 corresponding to the first corner 34 and/or the second corner 131 is relatively strong, and this position is a weak position, and is easy to crack. The insulating and sealing structure 8 is set to include the first part 83 and the second part 84, the material hardness of the first part 83 is lower than that of the second part 84, and the first part 83 is arranged closer to at least one of the first corner 34 and the second corner 131 than the second part 84, so that the insulating and sealing structure 8 uses the softer first part 83 with lower material hardness in the weak position, the first part 83 is easier to deform to absorb the acting force through being stressed and compressed than the second part 84, the cracking risk of the insulating and sealing structure 8 in the weak position is reduced, the insulating and sealing fitting reliability between the first shell wall 13 and the terminal 2 is favorably improved, and the reliability of the battery cell 102 is improved. In addition, through the arrangement of the second part 84 with the material hardness higher than that of the first part 83, the second part 84 achieves a supporting effect, so that the compression amount of the insulating and sealing structure 8 may be well controlled to achieve a more effective sealing effect, and the fitting sealing performance between the terminal 2 and the first shell wall 13 is improved.

It is worth noting that the material of the first part 83 and the material of the second part 84 are not limited, and may be specifically selected according to practical requirements. For example, the material of the first part 83 may be a compressible rubber material, a plastic material, etc., for example, PFA (polyfluoroalkoxy), or PP (polypropylene), or FKM (fluororubber), or EPDM (ethylene-propylene-diene monomer), so that the first part 83 may have good compression deformation performance to more effectively mitigate the cracking problem. For example, the material of the second part 84 may select an insulating material with high hardness, for example, PPS (polyphenylene sulfide, a novel high-performance thermoplastic resin) and LCP (liquid crystal polymers), so that the second part 84 has good hardness to achieve a supporting effect, and the compression amount of the insulating and sealing structure 8 may be well controlled, and the sealing performance is improved.

It is worth noting that the specific composition of the insulating and sealing structure 8 is not limited, and it may be one component, and may be formed by combining a plurality of components. Exemplarily, in combination with FIG. 7, the insulating and sealing structure 8 may include a first insulating and sealing element 85 and a second insulating and sealing element 86, the first part 83 and the second part 84 may form the first insulating and sealing element 85, the second insulating and sealing element 86 and the first insulating and sealing element 85 are approximately and respectively arranged at the inside and outside of the first shell wall 13, and in addition, the material hardness of the second insulating and sealing element 86 is lower than that of the second part 84, so that the good easy compression deformation sealing performance may be realized. For example, the second insulating and sealing element 86 may be a rubber element. When the second part 84 has the good supporting effect, the compression amount of the second insulating and sealing element 86 in the insulating and sealing structure 8 may be well controlled, so that the sealing effect is improved.

In some embodiments of the present application, as shown in FIG. 7, the insulating and sealing structure 8 includes a third corner 81 corresponding to the first corner 34, and the first part 83 includes a first sub-portion 831 arranged closer to the third corner 81 than the second part 84, and the material hardness of the first sub-portion 831 is lower than that of the second part 84. Therefore, the insulating and sealing structure 8 includes the third corner 81 corresponding to the first corner 34. When the terminal 2 is assembled and fixed to the first shell wall 13, the terminal 2 may extrude the insulating and sealing structure 8, the stress of a position of the insulating and sealing structure 8 in the third corner 81 is relatively great, and this position is easy to crack. Through the arrangement of the softer first sub-portion 831 with lower material hardness than the second part 84, the first sub-portion 831 is easy to deform to absorb the stress through being stressed and compressed, so that the cracking risk of the insulating and sealing structure 8 at the third corner 81 may be reduced.

In some embodiments of the present application, as shown in FIG. 8, the insulating and sealing structure 8 includes a fourth corner 82 corresponding to the second corner 131, the first part 83 includes a second sub-portion 832 arranged closer to the fourth corner 82 than the second part 84, and the material hardness of the second sub-portion 832 is lower than that of the second part 84. Therefore, the insulating and sealing structure 8 includes the fourth corner 82 corresponding to the second corner 131. When the terminal 2 is assembled and fixed to the first shell wall 13, the terminal 2 may extrude the insulating and sealing structure 8, the insulating and sealing structure 8 may extrude the first shell wall 13, the first shell wall 13 may exert counter-acting force onto the insulating and sealing structure 8, and the counter-acting force received by the insulating and sealing structure 8 at the fourth corner 82 position from the second corner 131 of the first shell wall 13 is relatively great, so it is easy to crack. Through the arrangement of the softer second sub-portion 832 with lower material hardness than the second part 84, the second sub-portion 832 is easy to generate compression deformation to absorb the stress, so that the cracking risk of the insulating and sealing structure 8 at the fourth corner 82 may be reduced.

It is worth noting that the first part 83 may further include the first sub-portion 831 and the second sub-portion 832 at the same time, so that the cracking risk of the insulating and sealing structure 8 in the weak position may be more comprehensively reduced, and the structure reliability of the insulating and sealing structure 8 is improved. In addition, it is worth noting that the material of the first sub-portion 831 and the material of the second sub-portion 832 may be the same, and may be different, and it may be specifically set according to practical conditions.

In some embodiments of the present application, as shown in FIG. 7 and FIG. 8, the terminal 2 forms the first extending portion 32 through flanging and riveting. That is, after the terminal 2 is assembled to the installing hole 12 position through the passing portion 33, the first extending portion 32 is manufactured by using a flanging and riveting process. Therefore, the processing of the terminal 2 is convenient, the connection reliability of the first extending portion 32 and the passing portion 33 is favorably improved, and the assembly reliability of the terminal 2 and the first shell wall 13 is improved.

As shown in FIG. 7, when the first extending portion 32 is processed by using the riveting process to process on the terminal 2, the terminal 2 may extrude the insulating and sealing structure 8, so that the stress of the insulating and sealing structure 8 in the third corner 81 position is relatively strong, and this position has the cracking risk. When the first part 83 includes the first sub-portion 831 arranged closer to the third corner 81 than the second part 84, the cracking risk of the insulating and sealing structure 8 in the third corner 81 position, i.e., the position corresponding to the first corner 34 may be reduced.

As shown in FIG. 8, when the first extending portion 32 is processed by using the riveting process on the terminal 2, the terminal 2 may extrude the insulating and sealing structure 8, the insulating and sealing structure 8 may extrude the first shell wall 13, the first shell wall 13 may exert counter-acting force onto the insulating and sealing structure 8, the stress received by the insulating and sealing structure 8 at the fourth corner 82 position is relatively strong, and this position has the cracking risk. When the first part 83 includes the second sub-portion 832 arranged closer to the fourth corner 82 than the second part 84, the cracking risk of the insulating and sealing structure 8 at the fourth corner 82 position, i.e., the position corresponding to the second corner 131 may be reduced.

Of course, the present application is not limited hereto. For example, in other embodiments of the present application, the terminal 2 may also be formed by welding two parts. For example, the two parts are respectively assembled to the installing hole 12, and then, the two parts are welded together. It may be understood that when the terminal 2 is assembled to the first shell wall 13 in another manner except for riveting, there may still be a phenomenon of extruding the insulating and sealing structure 8, and the insulating and sealing structure 8 is provided with the first part 83 and the second part 84 made of different materials, so that the first part 83 is closer to the weak and easy-to-crack position than the second part 84, the cracking problem of the insulating and sealing structure 8 may be mitigated, and the reliability of the insulating and sealing structure 8 may be improved.

In some embodiments, as shown in FIG. 7, when the first part 83 includes the first sub-portion 831 arranged closer to the third corner 81 than the second part 84, the first sub-portion 831 may define the local outer surface of the third corner 81. For example, the first sub-portion 831 may define the local part of the surface of one side of the insulating and sealing structure 8 towards the first extending portion 32, and/or define the local part of the surface of one side of the insulating and sealing structure 8 towards the passing portion 33. Therefore, a position of the first sub-portion 831 near the first corner 34 is exposed out of an outer surface of the insulating and sealing structure 8, so that the stress compression deformation may well occur, and it will be more beneficial to mitigate the cracking problem in this position through acting force buffering. In addition, through such arrangement, the processing difficulty of the first sub-portion 831 and the second part 84 in a combined manner may be reduced.

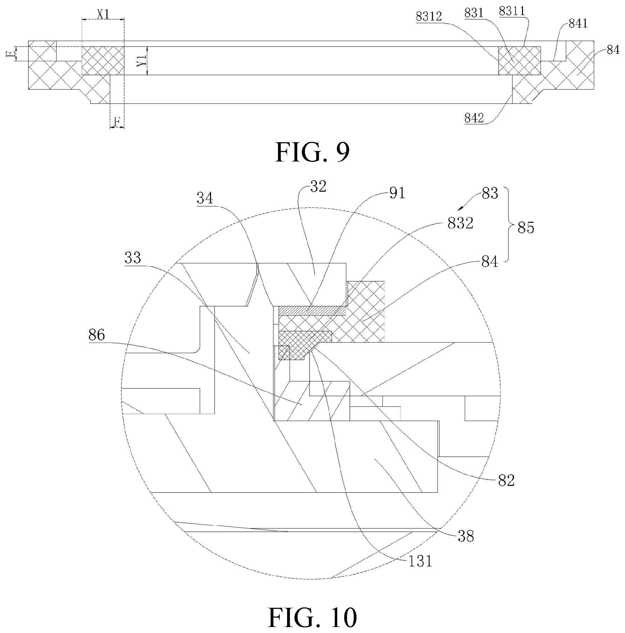

Exemplarily, as shown in FIG. 7, a surface of one side of the insulating and sealing structure 8 towards the first extending portion 32 includes a first face portion 8311 defined by the first sub-portion 831, the surface of the insulating and sealing structure 8 towards the first extending portion 32 further includes a second face portion 841 defined by the second part 84, and the first face portion 8311 exceeds or is flush with the second face portion 841. That is, the first face portion 8311 and the second face portion 841 are adjacent to each other and are coplanar, or in combination with FIG. 9, the first face portion 8311 exceeds the second face portion 841, that is, the first face portion 8311 and the second face portion 841 are adjacent to each other, and the first face portion 8311 locally protrudes out of one side of the second face portion 841 near the first extending portion 32.

Therefore, the surface of one side of the insulating and sealing structure 8 towards the first extending portion 32 includes the first face portion 8311 defined by the first sub-portion 831, so that the extruding force from the first extending portion 32 may be well buffered, and the cracking problem of the third corner 81 caused by the extruding force from the side of the first extending portion 32 may be effectively mitigated. In addition, the surface of one side of the insulating and sealing structure 8 towards the first extending portion 32 further includes the second face portion 841 defined by the second part 84, so that the second face portion may be used to achieve a supporting effect in the axial direction of the installing hole 12, the compression amount of the insulating and sealing structure 8 may be well controlled to achieve a more effective sealing effect, and the fitting sealing performance between the terminal 2 and the first shell wall 13 is improved. In addition, the first face portion 8311 is not recessed to be lower than the second face portion 841, so that when the terminal 2 extrudes the third corner 81 position of the insulating and sealing structure 8, the first face portion 8311 may achieve a buffering effect in time without being influenced by the second face portion 841, the third corner 81 position of the insulating and sealing structure 8 is protected, and the cracking problem in this position is mitigated. In addition, the first face portion 8311 exceeds or is flush with the second face portion 841, so that the processing and design flexibility of the insulating and sealing structure 8 may be improved.

In some embodiments of the present application, as shown in FIG. 7, the width W of the second face portion 841 in the wall thickness direction of the passing portion 33 may be equal to or greater than 0.5 mm, so that the width dimension of the second face portion 841 is sufficient, the supporting effect in the axial direction of the installing hole 12 may be well achieved, the compression amount of the insulating and sealing structure 8 may be well controlled, and the effective sealing effect may be achieved.

After the insulating and sealing structure 8 is assembled, the first sub-portion 831 may be extruded to deform, for example, the axial thickness of the first sub-portion 831 is Y1, and may decrease, and the radial width X1 may increase, and may decrease. Regardless of whether the first face portion 8311 protrudes out of the second face portion 841 or not, and regardless of whether the third face portion 8312 protrudes out of the fourth face portion 842, before the insulating and sealing structure 8 is assembled, in combination with FIG. 9, the radial direction of the first sub-portion 831 is X1, and the radial thickness is Y1. After the insulating and sealing structure 8 is assembled, the insulating and sealing structure 8 is extruded by the terminal 2 and the first shell wall 13, the radial width of the first sub-portion 831 becomes X2, and the radial thickness becomes Y2.

Exemplarily, 0.01*X1≤X2≤200%*X1, and 10%*Y1≤Y2≤100%*Y1. Therefore, the deformation scope of the first sub-portion 831 is wider, and a more effective extruding force buffering effect may be achieved, so that the insulating and sealing structure 8 may be well protected.

Exemplarily, Y1 is equal to or greater than 0.5 mm, so that the axial thickness of the first sub-portion 831 is sufficient, the extruding force from the first extending portion 32 may be well buffered, and the cracking problem of the third corner 81 caused by the extruding force from the side of the first extending portion 32 may be effectively mitigated.

It is worth noting that when the insulating and sealing structure 8 is constructed to a state that the first face portion 8311 exceeds the second face portion 841, this state may refer to a state before the insulating and sealing structure 8 is assembled, and after the insulating and sealing structure 8 is assembled, the relationship between the first face portion 8311 and the second face portion 841 may change. For example, the first face portion 8311 may be extruded to be flush with the second face portion 841, or the first face portion 8311 still exceeds the second face portion 841, etc.

In some embodiments, in combination with FIG. 9, when the first face portion 8311 exceeds the second face portion 841, the dimension E of the first face portion 8311 exceeding the second face portion 841 may be 0 mm to 1 mm. Therefore, on one hand, the dimension E of the first face portion 8311 exceeding the second face portion 841 may not be too small, so that the first face portion 8311 may be effectively compressed, the cracking problem of the third corner 81 is mitigated; and on the other hand, the dimension E of the first face portion 8311 exceeding the second face portion 841 may not be too big, so after the first face portion 8311 is compressed, the second face portion 841 may achieve an effective axial supporting effect, so that the compression amount of the insulating and sealing structure 8 may be well controlled, and an effective sealing effect is achieved.

In some embodiments, in combination with FIG. 9, when the third face portion 8312 exceeds the fourth face portion 842, the dimension F of the third face portion 8312 exceeding the fourth face portion 842 may be 0 mm to 3 mm. Therefore, on one hand, the dimension F of the third face portion 8312 exceeding the fourth face portion 842 may not be too small, so that the third face portion 8312 may be effectively compressed, the cracking problem of the third corner 81 is mitigated; and on the other hand, after the first face portion 8311 is compressed, the condition of the third face portion 8312 exceeding the fourth face portion 842 may be intensified, and through the arrangement that the dimension F of the third face portion 8312 exceeding the fourth face portion 842 may not be too big, so that the stress cracking problem caused by the excessive extrusion on the passing portion 33 by the third face portion 8312 may be avoided.

Of course, the present application is not limited thereto. For example, in some other embodiments of the present application, the surface of one side of the insulating and sealing structure 8 towards the first extending portion 32 may also be totally defined by the second part 84, or totally defined by the first sub-portion 831, etc.

Exemplarily, as shown in FIG. 7, a surface of one side of the insulating and sealing structure 8 towards the passing portion 33 includes a third face portion 8312 defined by the first sub-portion 831, the surface of one side of the insulating and sealing structure 8 towards the passing portion 33 further includes a fourth face portion 842 defined by the fourth part, and the third face portion 8312 is flush with the fourth face portion 842. That is, the third face portion 8312 and the fourth face portion 842 are adjacent to each other and are coplanar, or in combination with FIG. 9, the third face portion 8312 exceeds the fourth face portion 842, that is, the third face portion 8312 and the fourth face portion 842 are adjacent to each other, and the third face portion 8312 locally protrudes out of one side of the fourth face portion 842 near the passing portion 33.

It is worth noting that when the insulating and sealing structure 8 is constructed to a state that the third face portion 8312 exceeds the fourth face portion 842, this state may refer to a state before the assembly, and after the assembly, the relationship between the third face portion 8312 and the fourth face portion 842 may change. For example, the third face portion 8312 may be extruded to be flush with the fourth face portion 842, or the third face portion 8312 still exceeds the fourth face portion 842, etc.

Therefore, the surface of one side of the insulating and sealing structure 8 towards the passing portion 33 includes the third face portion 8312 defined by the first sub-portion 831, so that the extruding force from the passing portion 33 may be well buffered, and the cracking problem of the third corner 81 due to the extruding force from the passing portion 33 may be effectively mitigated. In addition, the third face portion 8312 is not recessed to be lower than the fourth face portion 842, so that when the terminal 2 extrudes the third corner 81 position of the insulating and sealing structure 8, the third face portion 8312 may achieve a buffering effect in time without being influenced by the fourth face portion 842, the third corner 81 position of the insulating and sealing structure 8 is protected, and the cracking problem in this position is mitigated. In addition, the third face portion 8312 exceeds or is flush with the fourth face portion 842, so that the processing and design flexibility of the insulating and sealing structure 8 may be improved.

Of course, the present application is not limited thereto. For example, in some other embodiments of the present application, the surface of one side of the insulating and sealing structure 8 towards the passing portion 33 may also be totally defined by the second part 84, or totally defined by the first sub-portion 831, etc.

In some embodiments, the first face portion 8311 in the surface of one side of the insulating and sealing structure 8 towards the first extending portion 32 and the third face portion 8312 in the surface of one side of the insulating and sealing structure 8 towards the passing portion 33 are defined by the first sub-portion 831 at the same time, the first face portion 8311 and the second face portion 841 are connected, for example, the second part 84 may be provided with a first notch in a position corresponding to the first corner 34, and the first sub-portion 831 fills the first notch, so that the processing of the insulating and sealing structure 8 is convenient, the first sub-portion 831 may favorably achieve a protection effect on the third corner 81, and the cracking problem of the third corner 81 is mitigated.

In some embodiments, as shown in FIG. 8, when the first part 83 includes the second sub-portion 832 arranged closer to the fourth corner 82 than the second part 84, the second sub-portion 832 may define the local outer surface of the fourth corner 82. Therefore, a position of the second sub-portion 832 near the second corner 131 is exposed out of an outer surface of the insulating and sealing structure 8, so that the stress compression deformation may well occur, and it will be more beneficial to mitigate the cracking problem in this position through acting force buffering. In addition, through such arrangement, the processing difficulty of the first sub-portion 831 and the second part 84 in a combined manner may be reduced.

In some embodiments, a fit clearance is formed between the passing portion 33 and the insulating and sealing structure 8, so that the passing portion 33 is not easy to directly extrude the insulating and sealing structure 8, the acting force transmitted onto the insulating and sealing structure 8 may be further reduced, the damage to the insulating and sealing structure 8 is reduced, and an effect of protecting the insulating and sealing structure 8 is achieved.

It is worth noting that when the insulating and sealing structure 8 is formed into an annular structure around the central axis L of the installing hole 12, the first sub-portion 831 may be constructed into an annular structure extending for a whole circle along the circumference direction of the insulating and sealing structure 8, so that the processing is convenient, and the anti-cracking effect is comprehensive. Or, the structure may also be constructed into a disconnected structure arranged at intervals in the circumference direction of the insulating and sealing structure 8, so that the material consumption and the cost may be favorably reduced.

In a similar way, when the insulating and sealing structure 8 is formed into an annular structure around the central axis L of the installing hole 12, the second sub-portion 832 may be constructed into an annular structure extending for a whole circle along the circumference direction of the insulating and sealing structure 8, so that the processing is convenient, and the anti-cracking effect is comprehensive. Or, the structure may also be constructed into a disconnected structure arranged at intervals in the circumference direction of the insulating and sealing structure 8, so that the material consumption and the cost may be favorably reduced.

In some embodiments of the present application, as shown in FIG. 10, the battery cell 102 includes a first gasket 91, and the first gasket 91 is arranged between the first extending portion 32 and the insulating and sealing structure 8. Therefore, when the terminal 2 is installed onto the first shell wall 13, and the first extending portion 32 extrudes the insulating and sealing structure 8 in a direction towards the first shell wall 13 (for example, extrudes the insulating and sealing structure 8 in the axial direction of the installing hole 12), the first gasket 91 is arranged between the insulating and sealing structure 8 and the first extending portion 32, so that the first gasket 91 may reduce a part of acting force to reduce the acting force transmitted to the insulating and sealing structure 8, the damage to the insulating and sealing structure 8 is further reduced, and an effect of protecting the insulating and sealing structure 8 is achieved.

It is worth noting that the material hardness of the first gasket 91 and the material hardness of the insulating and sealing structure 8 are not limited. For example, the material hardness of the first gasket 91 may be higher than the material hardness of the second part 84, so that the first gasket 91 may well relieve the extruding force transferred to the insulating and sealing structure 8, and the cracking problem of the insulating and sealing structure 8 is more effectively mitigated. For example, the second part 84 may be a plastic element, and the first gasket 91 may be a metal element, so that an effect that the material hardness of the first gasket 91 is higher than the material hardness of the second part 84 may be achieved. Exemplarily, the material of the first gasket 91 may be a steel material, such as SUS304, SUS316, and SPCC, or may be an aluminum material, such as Al 1060.

Exemplarily, when the first gasket 91 is used, only the second sub-portion 832 but no first sub-portion 831 may be used, in such a manner, the cracking problem of the insulating and sealing structure 8 in positions of the third corner 81 and the fourth corner 82 may be well mitigated, and the structure of the insulating and sealing structure 8 may be simplified. However, the present application is not limited thereto. When the first gasket 91 is used, the first sub-portion 831 and the second sub-portion 832 may be used as the same time, so as to more sufficiently mitigate the cracking problem of the insulating and sealing structure 8 in positions of the third corner 81 and the fourth corner 82.

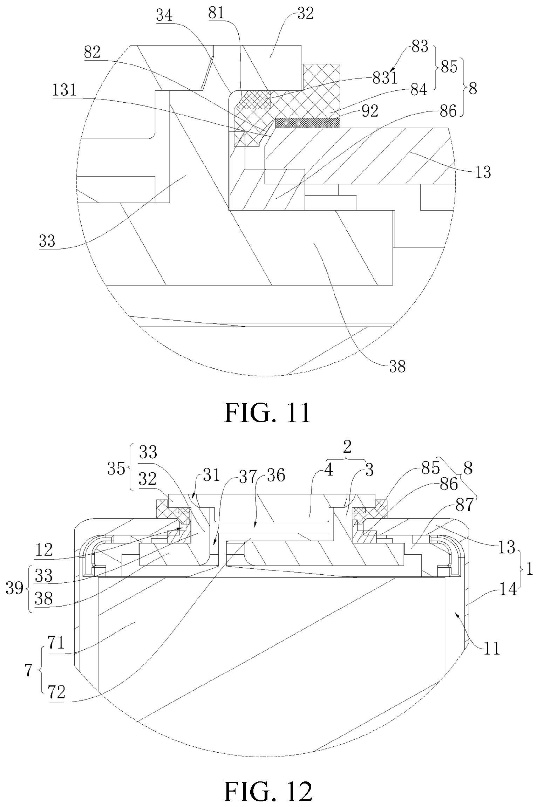

In some embodiments of the present application, as shown in FIG. 11, the battery cell 102 includes a second gasket 92, the second gasket 92 is arranged between the insulating and sealing structure 8 and a surface of one side of the first shell wall 13 towards the first extending portion 32, and the material hardness of the second gasket 92 is lower than that of the second part 84. For example, when the first extending portion 32 extends to the outside of the outer surface of the first shell wall 13, the second gasket 92 is arranged between the first extending portion 32 and the outer surface of the first shell wall 13. For another example, when the first extending portion 32 extends to the inside of the inner surface of the first shell wall 13, the second gasket 92 is arranged between the first extending portion 32 and the inner surface of the first shell wall 13.

Therefore, when the terminal 2 is installed onto the first shell wall 13, and the terminal 2 extrudes the insulating and sealing structure 8 in a direction towards the first shell wall 13 (for example, extrudes the insulating and sealing structure 8 in the axial direction of the installing hole 12), the insulating and sealing structure 8 may conduct the acting force to the second gasket 92. The second gasket 92 has relatively low material hardness, and may thus generate compression deformation to absorb the acting force, so that the counter-acting force fed back to the insulating and sealing structure 8 may be reduced, the damage to the insulating and sealing structure 8 is reduced, and an effect of protecting the insulating and sealing structure 8 is achieved.

Exemplarily, when the second gasket 92 is used, only the first sub-portion 831 but no second sub-portion 832 may be used, in such a manner, the cracking problem of the insulating and sealing structure 8 in positions of the third corner 81 and the fourth corner 82 may be well mitigated, and the structure of the insulating and sealing structure 8 may be simplified. However, the present application is not limited thereto. When the second gasket 92 is used, the first sub-portion 831 and the second sub-portion 832 may be used as the same time, so as to more sufficiently mitigate the cracking problem of the insulating and sealing structure 8 in positions of the third corner 81 and the fourth corner 82.

In some embodiments of the present application, as shown in FIG. 11, the insulating and sealing structure 8 includes a fourth corner 82 corresponding to the second corner 131, at least one of the second corner 131 and the fourth corner 82 forms a chamfer (such as a round chamfer or an inclined chamfer). That is, the conditions may include that only the second corner 131 forms a chamfer, and the fourth corner 82 forms a non-chamfer, such as a right angle, an acute angle, or an obtuse angle; or, only the fourth corner 82 forms a chamfer, the second corner 131 forms a non-chamfer, such as a right angle, an acute angle, or an obtuse angle; or, the second corner 131 and the fourth corner 82 both form chamfers.

When the terminal 2 is assembled and fixed to the first shell wall 13, the second corner 131 is easy to extrude the fourth corner 82, so that the insulating and sealing structure 8 cracks from the fourth corner 82 position. If the second corner 131 is set into the chamfer form, the stress area of the second corner 131 on the fourth corner 82 may be increased, so that the stress positions are scattered. Therefore, the concentrated extrusion of the stress on the fourth corner 82 position is reduced, so that the cracking risk of the insulating and sealing structure 8 in the fourth corner 82 position is reduced. If the fourth corner 82 is set to be the chamfer form, when the second corner 131 exerts force onto the fourth corner 82, the stress area of the fourth corner 82 may be increased, so that the stress in the fourth corner 82 position is scattered, and the cracking risk of the insulating and sealing structure 8 in the fourth corner 82 position is reduced. Therefore, at least one of the second corner 131 and the fourth corner 82 is formed into a chamfer, and the cracking risk of the insulating and sealing structure 8 at the fourth corner 82 position may be reduced.

In some embodiments of the present application, regardless of whether at least one of the second comer 131 and the fourth corner 82 is processed into the chamfer form, a fit clearance may be formed between the second corner 131 and the fourth corner 82. In such a manner, the extrusion on the fourth corner 82 by the second corner 131 may be reduced to a certain degree, and the cracking risk of the insulating and sealing structure 8 at the fourth corner 82 position is reduced.

In some embodiments of the present application, as shown in FIG. 11, the insulating and sealing structure 8 includes a third corner 81 corresponding to the first corner 34, at least one of the first corner 34 and the third corner 81 forms a chamfer (such as a round chamfer or an inclined chamfer). That is, the conditions may include that only the first corner 34 forms a chamfer, and the third corner 81 forms a non-chamfer, such as a right angle, an acute angle, or an obtuse angle; or, only the third corner 81 forms a chamfer, and the first corner 34 forms a non-chamfer, such as a right angle, an acute angle, or an obtuse angle; or, the first corner 34 and the third corner 81 both form chamfers.

When the terminal 2 is assembled and fixed to the first shell wall 13, the first corner 34 is easy to extrude the third corner 81, so that the insulating and sealing structure 8 cracks from the third corner 81 position. If the first corner 34 is set into the chamfer form, the stress area of the first corner 34 on the third corner 81 may be increased, so that the stress positions are scattered. Therefore, the concentrated extrusion of the stress on the third corner 81 position is reduced, so that the cracking risk of the insulating and sealing structure 8 in the third corner 81 position is reduced. If the third corner 81 is set to be the chamfer form, when the first corner 34 exerts force onto the third corner 81, the stress area of the third corner 81 may be increased, so that the stress in the third corner 81 position is scattered, and the cracking risk of the insulating and sealing structure 8 in the third corner 81 position is reduced. Therefore, at least one of the first corner 34 and the third corner 81 is formed into a chamfer, and the cracking risk of the insulating and sealing structure 8 at the third corner 81 position may be reduced.

In some embodiments of the present application, regardless of whether at least one of the first corner 34 and the third corner 81 is processed into the chamfer form, a fit clearance may be formed between the first corner 34 and the third corner 81. In such a manner, the extrusion on the third corner 81 by the first corner 34 may be reduced to a certain degree, and the cracking risk of the insulating and sealing structure 8 at the third corner 81 position is reduced.

It is worth noting that regardless of whether the first sub-portion 831 is arranged in the third corner 81 position or not, the third corner 81 may be processed into the chamfer form, and regardless of whether the second sub-portion 832 is arranged in the fourth corner 82 position or not, the fourth corner 82 may be processed into the chamfer form. In addition, both the chamfer and the gasket may be used, or one of the chamfer and the gasket may be used. It is not limited thereto.

In some embodiments of the present application, as shown in FIG. 6, the passing portion 33 and the first extending portion 32 form a first terminal portion 35, the insulating and sealing structure 8 includes a first insulating and sealing element 85 fitted between the first terminal portion 35 and the first shell wall 13, and the first insulating and sealing element 85 consists of a first part 83 and a second part 84. Therefore, the composition of the first insulating and sealing element 85 may be simplified, and the processing of the first insulating and sealing element 85 is convenient.

Further, as shown in FIG. 6, the terminal 2 further includes a second extending portion 38 connected with the passing portion 33 and extending in a direction far away from the central axis L of the installing hole 12 relative to the passing portion 33, the second extending portion 38 and the first extending portion 32 respectively extend to the inside and outside of the first shell wall 13, for example, the first extending portion 32 extends to the outside of the first shell wall 13, the second extending portion 38 extends to the inside of the first shell wall 13, and if the first extending portion 32 extends to the inside of the first shell wall 13, the second extending portion 38 extends to the outside of the first shell wall 13. The passing portion 33 and the second extending portion 38 form a second terminal portion 39, the insulating and sealing structure 8 includes a second insulating and sealing element 86 fitted between the second terminal portion 39 and the first shell wall 13, and the second insulating and sealing element 86 and the first insulating and sealing element 85 are in split arrangement. It shall be understood that the first terminal portion 35 and the second terminal portion 39 share the passing portion 33.

Therefore, the terminal 2 includes the first extending portion 32 and the second extending portion 38 separately arranged at the inside and outside of the first shell wall 13, so that the fitting of the terminal 2 and the first shell wall 13 may be more stable, firmer and more reliable. In addition, the insulating and sealing structure 8 includes the first insulating and sealing element 85 and the second insulating and sealing element 86 arranged in a split manner, so that the first insulating and sealing element 85 and the second insulating and sealing element 86 may be respectively and singly installed, the assembly difficulty is reduced, and the insulating and sealing fitting effect of the terminal 2 and each position of the first shell wall 13 may be ensured.

In addition, in some embodiments, in combination with FIG. 6, the insulating and sealing structure 8 may include a third insulating and sealing element 87, the third insulating and sealing element 87 may be arranged between the second extending portion 38 and the shell 1 and is in butt joint with the active material coating portion 71 of the battery cell assembly 7, so that the insulation performance between the battery cell assembly 7 and the shell 1 may be improved, in addition, the fitting stability between the battery cell assembly 7 and the shell 1 may be improved, and the reliability of the battery cell 102 may be further improved. Or, the third insulating and sealing element 87 may be omitted, in addition, an insulating support frame (not shown in the figures) is sheathed on an end portion of the active material coating portion 71, and the insulating support frame is in butt joint with the inner surface of the shell 1, so that the battery cell assembly 7 may be favorably protected when the battery cell assembly 7 is installed to the shell 1, the scratching between the shell 1 and the battery cell assembly 7 is avoided, in addition, the insulating performance between the battery cell assembly 7 and the shell 1 may be improved, at the same time, the fitting stability between the battery cell assembly 7 and the shell 1 may be improved, and the reliability of the battery cell 102 may be further improved.

In some embodiments of the present application, as shown in FIG. 6, the terminal 2 includes a terminal body 3 and a terminal cover plate 4, the terminal body 3 includes the first terminal portion 35 and the second terminal portion 39, the first extending portion 32 extends to the outside of the outer surface of the first shell wall 13, the terminal cover plate 4 covers one side of the first terminal portion 35 far away from the second terminal portion 39, the terminal body 3 is connected with the terminal cover plate 4 through welding, and the material hardness of the second insulating and sealing element 86 is lower than that of the second part 84.

Therefore, the material hardness of the second part 84 is higher than that of the second insulating and sealing element 86, the second insulating and sealing element 86 is easier to generate compression deformation and has a better sealing effect than the second part 84. However, the heat resistance capability of the second part 84 is better than that of the second insulating and sealing element 86, for example, the second part 84 is a plastic element, and the second insulating and sealing element 86 is a rubber element, so when the terminal body 3 is welded to the terminal cover plate 4, the heat influence on the second insulating and sealing element 86 may be possibly reduced, and the sealing reliability between the first shell wall 13 and the terminal 2 may be improved.

In some embodiments of the present application, as shown in FIG. 12, the outer side of the first extending portion 32 towards the first shell wall 13 protrudes out of the passing portion 33 so as to define a sinking groove 31 between the first extending portion 32 and the passing portion 33, an edge of the terminal cover plate 4 is arranged in the sinking groove 31, and is welded in a penetrating manner with the passing portion 33, and a welding structure formed through welding is separated from the first extending portion 32.

Therefore, shrinkage stress generated by solidification of a weld pool formed through welding may be blocked by the above interval, and is difficult or less to be conducted to the first extending portion 32, so that the tilting problem of the first extending portion 32 may be mitigated, the first extending portion 32 may tightly press the insulating and sealing structure 8, and the insulating and sealing effect may be improved. In addition, the edge of the terminal cover plate 4 is arranged in the sinking groove 31, is welded with the passing portion 33 in a penetrating manner, but is not in butt welding to the first extending portion 32, so that the effort of ensuring a small assembling clearance between the edge of the terminal cover plate 4 and the first extending portion 32 to meet the butt welding requirement is not needed, a gap between the edge of the terminal cover plate 4 and the first extending portion 32 may be great, the compatibility of the terminal body 3 is improved, and the processing precision of the terminal cover plate 4 and the terminal body 3 is favorably reduced.

In some embodiments of the present application, as shown in FIG. 12, an accommodating cavity 11 is formed by the battery cell 102 at an inner side of the first shell wall 13, the terminal 2 includes a terminal body 3, an accommodating groove 36 open in a direction far away from the accommodating cavity 11 is formed in the terminal body 3, a communication hole 37 is formed in the terminal body 3, and the communication hole 37 penetrates through a groove wall of one side of the accommodating groove 36 near the accommodating cavity 11, and connects the accommodating cavity 11 and the accommodating groove 36. For example, when the passing portion 33 is in an annular shape, the accommodating groove 36 is positioned in an inner ring region of the passing portion 33, for example, the accommodating groove 36 may be jointly defined by the passing portion 33 and a supporting portion positioned in the inner ring region of the passing portion 33, and the communication hole 37 penetrates through the supporting portion.

Therefore, when the battery cell 102 is filled with an electrolyte, the electrolyte may be filled into the accommodating groove 36, and then flows to the accommodating cavity 11 through the communication hole 37. The accommodating groove 36 may achieve an effect of temporarily storing the electrolyte to mitigate the problems of sputtering, overflowing, and the like of the electrolyte. In addition, a side wall of the accommodating groove 36 (i.e., the groove wall of the accommodating groove 36 with a groove opening extending in a direction towards the accommodating cavity 11) may prevent the electrolyte from sputtering out to a certain degree, the pollution caused by the electrolyte on the outside may be reduced, and the fast liquid filling may be conveniently realized. In addition, the single formation of a liquid filling passage on the shell 1 is not needed, so that the special processing on the shell 1 is not needed, and the structure complexity and processing difficulty of the shell 1 are favorably reduced.

Exemplarily, as shown in FIG. 12, the side of the sinking groove 31 towards the central axis L of the installing hole 12 is open, so as to be communicated with the accommodating groove 36. Therefore, the fitting compactness of the terminal body 3 and the terminal cover plate 4 may be improved, and the structure and the processing of the terminal cover plate 4 may be simplified.

In some embodiments of the present application, as shown in FIG. 12, the battery cell 102 includes a battery cell assembly 7, the battery cell assembly 7 includes an active material coating portion 71 accommodated in the accommodating cavity 11 and a conduction portion 72 connected with the active material coating portion 71, and the conduction portion 72 is arranged in the communication hole 37 in a penetrating manner to be at least partially accommodated in the accommodating groove 36.

It is worth noting that the quantity of the communication hole(s) 37 may be one or more, and the conduction portion 72 may be arranged in at least one communication hole 37 in a penetrating manner. Exemplarily, the electrolyte may pass through the at least one communication hole 37, for example, at least one communication hole 37 is vacant (is not provided with the conduction portion 72 in a penetrated manner), so that the electrolyte may pass through the communication hole without the obstruction by the conduction portion 72, and for another example, the electrolyte may still pass through the at least one communication hole 37 after the communication hole is provided with the conduction portion 72 in a penetrated manner.

Therefore, the conduction portion 72 is at least partially accommodated in the accommodating groove 36, so that the conduction portion 72 at least partially occupies a space in the accommodating groove 36, the space occupation of the conduction portion 72 on the accommodating cavity 11 may be reduced, the space in the accommodating cavity 11 may be saved to accommodate the active material coating portion 71 with a greater size, the energy density of the battery cell 102 is favorably improved, or the size of the battery cell 102 may be favorably reduced under the condition of not changing the energy density of the battery cell 102.

It may be understood that the active material coating portion 71 may include a current collector coated with an active material layer, the conduction portion 72 may only include a tab portion, or may include the tab portion, an adaptor sheet electrically connected with the tab portion, etc., and it is not limited thereto.

In some embodiments, the conduction portion 72 and the terminal body 3 are welded to realize electrical connection, so that the electrode output of the battery cell assembly 7 from the terminal body 3 position is realized. Exemplarily, as shown in FIG. 12, the conduction portion 72 is welded to the groove wall of one side of the accommodating groove 36 near the accommodating cavity 11, so that the fitting compactness may be improved, and the welding operation of the conduction portion and the groove wall may be convenient. Of course, the present application is not limited thereto. In other embodiments, the conduction portion 72 may also be welded to the terminal cover plate 4 to form electrical connection, and it is not limited thereto.

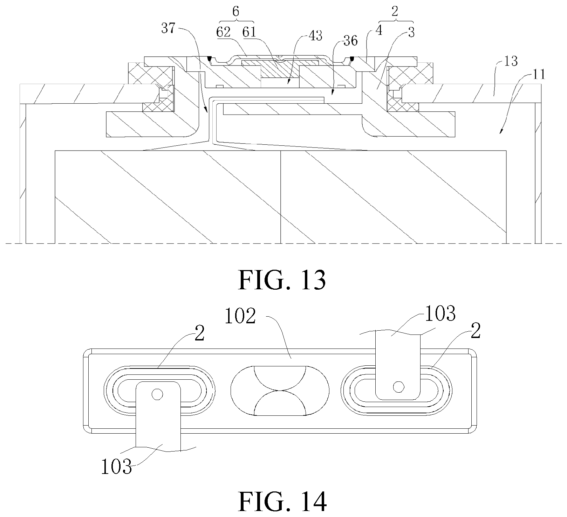

In some embodiments, as shown in FIG. 13, the terminal 2 includes the terminal cover plate 4 covering the terminal body 3, a liquid filling hole 43 capable of being communicated with the accommodating groove 36 is formed on the terminal cover plate 4, and the battery cell 102 further includes a sealing structure 6 for sealing the liquid filling hole 43. Therefore, when the battery cell 102 needs to be filled with the electrolyte, the sealing structure 6 is not installed to the liquid filling hole 43, or the sealing structure 6 is in a state that the liquid filling hole 43 is open, and at this moment, the electrolyte may be filled into the accommodating groove 36 through the liquid filling hole 43. In addition, after the liquid filing, the sealing structure 6 may be installed in the liquid filling hole 43 position, or the sealing structure 6 may be switched into a state that the liquid filling hole 43 is closed, so that the liquid filling hole 43 is sealed and closed to prevent the electrolyte from overflowing and prevent external foreign materials from entering the accommodating cavity 11 from the position of the liquid filling hole 43, and the reliability of the battery cell 102 is improved.

Therefore, the liquid filling hole 43 is processed on the terminal cover plate 4, the hole size is relatively small, and the position is close to the outside, the liquid filling opening may be easily and reliably sealed through the sealing structure 6, the working reliability of the battery cell 102 is improved, and the flexible and diversified design of the sealing structure 6 may be realized.

In some embodiments, as shown in FIG. 13, the terminal cover plate 4 is not provided with a part stopped at the outside (i.e., the side far away from the accommodating cavity 11) of the sealing structure 6, so that the sealing structure 6 is suitable for being installed to the terminal cover plate 4 from the outside (i.e., the side far away from the accommodating cavity 11) of the terminal cover plate 4. Therefore, the sealing structure 6 is set to be installed to the terminal cover plate 4 from the outside of the terminal cover plate 4 to seal the liquid filling hole 43, so that the sealing structure 6 is installed after the liquid filling, the sealing performance of the liquid filling hole 43 may be ensured, the installing position is close to the outside, and the sealing structure 6 may be conveniently and fast assembled. In addition, the installation of the sealing structure 6 may not cause adverse influence on the connection between the terminal body 3 and the terminal cover plate 4, and the connection reliability of the terminal cover plate 4 and the terminal body 3 is ensured.

The sealing structure 6 may be in a dismountable form, and may also be in a dismountable and fixed form. Exemplarily, when the sealing structure 6 is in a dismountable form, the liquid filling hole 43 may be favorably maintained, for example, when the electrolyte needs to be supplemented, the sealing structure 6 may be dismounted, the liquid filling hole 43 may be opened, the electrolyte is supplemented and filled into the accommodating cavity 11 through the liquid filling hole 43, and then, the sealing structure 6 is installed back. For example, the sealing structure 6 may be detachably connected to the terminal cover plate 4 in a threaded or screwed buckling manner or another manner, so that the mounting and dismounting are convenient.

Exemplarily, when the sealing structure 6 is in a dismountable and fixed form, the sealing structure 6 may be fixed to the terminal cover plate 4 in a manner such as welding and riveting, so that the sealing reliability of the sealing structure 6 on the liquid filling hole 43 may be improved. For example, the liquid filling hole 43 may be in a multi-section form, the sealing structure 6 may include a first sealing element 61 in interference fit with the liquid filling hole 43, and a second sealing element 62 covering the outside of the first sealing element 61 and welded to the terminal cover plate 4.

Or, in some embodiments, the second sealing element 62 is set to be detachably connected with the terminal cover plate 4 in a screwed buckling manner, so that the first sealing element 61 is limited in a position in interference fit with the liquid filling hole 43.

In some embodiments of the present application, as shown in FIG. 13, the sealing structure 6 is at least partially embedded in the liquid filling hole 43. That is, the sealing structure 6 may be totally embedded in the liquid filling hole 43, and only a part of the sealing structure 6 may be embedded in the liquid filling hole 43. Therefore, on one hand, the space inside the liquid filling hole 43 may be sufficiently utilized, and the sealing reliability of the sealing structure 6 on the liquid filling hole 43 is improved; and on the other hand, the height of the sealing structure 6 protruding out of the liquid filling hole 43 may be reduced, the space occupation beyond the terminal cover plate 4 by the sealing structure 6 is reduced, the interference influence on the current collecting component 103 is favorably reduced, the connection area of the current collecting component 103 and the terminal cover plate 4 is increased, and the current passing efficiency is improved.

In some embodiments of the present application, as shown in FIG. 13, the first shell wall 13 is an integrally formed cover plate, or, as shown in FIG. 12, the shell 1 includes further includes a second shell wall 14, the first shell wall 13 and the at least one second shell wall 14 are integrally formed, and the second shell wall 14 extends towards the side in the thickness direction of the first shell wall 13. Therefore, the flexible design of the structure position of the terminal 2 may be realized, so that the application scope of the battery cell 102 provided by embodiments of the present application is expanded.

It is worth noting that the second shell wall 14 may extend out from the edge of the first shell wall 13. When the first shell wall 13 is in a rectangular shape, at least one edge of the four edges of the first shell wall 13 may extend out to form the second shell wall 14, for example, only one edge of the first shell wall 13 may extend out to form the second shell wall 14, only two edges of the first shell wall 13 may also respectively extend out to form the second shell wall 14, three edges of the first shell wall 13 may respectively extend out to from the second shell wall 14, and four edges of the first shell wall 13 may respectively extend out to form the second shell wall 14. Exemplarily, when the shell 1 is a rectangular shell, any one wall surface of the rectangular shell may be used as the first shell wall 13.

For example, the shell 1 may include a shell body and a cover plate, the shell body defines a space with an open side, the cover plate covers the open side of the shell body so as to form the accommodating cavity 11 between the shell body and the cover plate, at this moment, the surface of the side of the shell body opposite to the cover plate is the first shell wall 13, the wall surface of the shell body connected between the first shell wall 13 and the cover plate is the second shell wall 14, or, the surface of the side of the shell body opposite to the cover plate is the second shell wall 14, the wall surface of the shell body connected between the second shell wall 14 and the cover plate is the first shell wall 13, or the cover plate is the first shell wall 13. The above conditions are all possible.

According to second aspect embodiments of the present application, embodiments of the present application further provide a battery 100, including the battery cell 102 according to any one of the above solutions. It is worth noting that the battery 100 according to embodiments of the present application may include a box body or may not include a box body. Therefore, the reliability of the battery cell 102 according to embodiments of the present application is improved, so that the performance of the battery 100 is favorably improved.

Exemplarily, as shown in FIG. 14, the battery 100 may further include a current collecting component 103, a plurality of battery cells 102 are used, and the at least two battery cells are electrically connected through the current collecting component 103. Therefore, the series connection and/or parallel connection of the plurality of battery cells 102 may be realized. For example, when the plurality of battery cells 102 are connected in series, the terminal cover plate 4 of an anode of the battery cell 102 is connected with the terminal cover plate 4 of a cathode of the next battery cell 102 through one current collecting component 103. At the same time, the terminal cover plate 4 of the cathode of the battery cell 102 is connected with the terminal cover plate 4 of the anode of the previous battery cell 102 through another current collecting component 103.

According to third aspect embodiments of the present application, embodiments of the present application further provide an electric device, including a battery 100 according to any one of the above solutions. The battery 100 is used for providing electric power for the electric device. The electric device may be any one device or system using the battery 100. The performance of the battery 100 is improved, so that the working electric performance of the electric device is favorably improved.

A battery cell 102 according to a specific embodiment of the present application will be described hereafter.

The battery cell 102 includes a shell 1, a terminal 2, and an insulating and sealing structure 8. The shell 1 includes a first shell wall 13, an installing hole 12 is formed in the first shell wall 13, the terminal 2 includes a passing portion 33 passing through the installing hole 12, a first extending portion 32 connected with the passing portion 33 and extending in a direction far away from the central axis L of the installing hole 12 relative to the passing portion 33, and a second extending portion 38 connected with the passing portion 33 and extending in a direction far away from the central axis L of the installing hole 12 relative to the passing portion 33, the first extending portion 32 extends to outside an outer surface of the first shell wall 13, the second extending portion 38 extends to the inside of an inner surface of the first shell wall 13, and the terminal 2 forms the first extending portion 32 through flanging and riveting.

The passing portion 33 and the first extending portion 32 form a first terminal portion 35, the insulating and sealing structure 8 includes a first insulating and sealing element 85 fitted between the first terminal portion 35 and the first shell wall 13, the passing portion 33 and the second extending portion 38 form a second terminal portion 39, the insulating and sealing structure 8 includes a second insulating and sealing element 86 which is fitted between the second terminal portion 39 and the first shell wall 13 and is in split arrangement from the first insulating and sealing element 85.

A first corner 34 is arranged towards the first shell wall 13 is provided at the connection between the first extending portion 32 and the passing portion 33. The first shell wall 13 includes a second corner 131 corresponding to the first corner 34, the first insulating and sealing element 85 includes a third corner 81 corresponding to the first corner 34, and a fourth corner 82 corresponding to the second corner 131.

The first insulating and sealing element 85 consists of a first part 83 and a second part 84, and is formed into a dismountable integral element, the first part 83 includes a first sub-portion 831 closer to the third corner 81 than the second part 84 and/or a second sub-portion 832 arranged closer to the fourth corner 82 than the second part 84, and the material hardness of the first part 83 is lower than that of the second part 84.

During assembly, the first insulating and sealing element 85, the second insulating and sealing element 86 and the terminal 2 may be firstly installed to the position of the installing hole 12 of the first shell wall 13, then, the first extending portion 32 is processed by using a riveting process, at this moment, the terminal 2 may exert acting force onto the first insulating and sealing element 85, the first shell wall 13 may exert counter-acting force onto the first insulating and sealing element 85, the stress of a position of the first insulating and sealing element 85 corresponding to the first corner 34 and/or the second corner 131 is relatively concentrated, and this position is a weak position, and is easy to crack. The first insulating and sealing element 85 use/uses the softer materials with lower material hardness in the third corner 81 and/or the fourth corner 82 than other positions, compression deformation may easily occur after the stressing, and the acting force may be absorbed, so that the cracking risk of the first insulating and sealing element 85 in the weak position is reduced, the insulating and sealing fitting reliability between the first shell wall 13 and the terminal 2 is favorably improved, and the reliability of the battery cell 102 is improved. In addition, the first insulating and sealing structure 8 uses the harder materials with higher hardness in positions than the corners except for the third corner 81 and the fourth corner 82, and the supporting effect may be achieved, so that the compression amount of the second insulating and sealing element 86 may be well controlled to achieve a more effective sealing effect, and the fitting sealing performance between the terminal 2 and the first shell wall 13 is improved.

It should be noted that the embodiments of the present application and the features in the embodiments may be combined with each other if there is no conflict.

The foregoing descriptions are merely exemplary embodiments of the present application, but are not intended to limit the present application. A person skilled in the art may make various alterations and variations to the present application. Any modification, equivalent replacement, or improvement made without departing from the spirit and principle of the present application shall fall within the protection scope of the present application.

## Claims

1. A battery cell, comprising:
a first shell wall, provided with an installing hole;
a terminal, comprising a passing portion passing through the installing hole and a first extending portion connected with the passing portion and extending in a direction far away from a central axis of the installing hole relative to the passing portion, the first extending portion extending to the outside of an outer surface or the inside of an inner surface of the first shell wall, a first corner arranged towards the first shell wall being provided at the connection between the first extending portion and the passing portion, and the first shell wall comprising a second corner corresponding to the first corner; and
an insulating and sealing structure, fitted between the first shell wall and the terminal and comprising a first part and a second part, the material hardness of the first part being lower than that of the second part, and the first part being arranged closer to at least one of the first corner and the second corner than the second part.

2. The battery cell according to claim 1, wherein the insulating and sealing structure comprises a third corner corresponding to the first corner, and the first part comprises a first sub-portion arranged closer to the third corner than the second part.

3. The battery cell according to claim 2, wherein the first sub-portion defines a local outer surface of the third corner.

4. The battery cell according to claim 3, wherein a surface of one side of the insulating and sealing structure towards the first extending portion comprises a first face portion defined by the first sub-portion, the surface of one side of the insulating and sealing structure towards the first extending portion further comprises a second face portion defined by the second part, and the first face portion exceeds or is flush with the second face portion.

5. The battery cell according to claim 3 or 4, wherein a surface of one side of the insulating and sealing structure towards the passing portion comprises a third face portion defined by the first sub-portion, the surface of one side of the insulating and sealing structure towards the passing portion further comprises a fourth face portion defined by the second part, and the third face portion exceeds or is flush with the fourth face portion.

6. The battery cell according to any one of claims 1 to 5, wherein the insulating and sealing structure comprises a fourth corner corresponding to the second corner, and the first part comprises a second sub-portion arranged closer to the fourth corner than the second part.

7. The battery cell according to claim 6, wherein the second sub-portion defines a local outer surface of the fourth corner.

8. The battery cell according to any one of claims 1 to 7, wherein a fit clearance is formed between the passing portion and the insulating and sealing structure.

9. The battery cell according to any one of claims 1 to 8, wherein each of the second part and the first part is of an annular structure extending for a whole circle along the circumference direction of the installing hole.

10. The battery cell according to any one of claims 1 to 9, wherein the insulating and sealing structure comprises a third corner corresponding to the first corner, at least one of the first corner and the third corner forms a chamfer, and/or a fit clearance is formed between the first corner and the third corner.

11. The battery cell according to any one of claims 1 to 10, wherein the insulating and sealing structure comprises a fourth corner corresponding to the second corner, at least one of the second corner and the fourth corner forms a chamfer, and/or a fit clearance is formed between the second corner and the fourth corner.

12. The battery cell according to any one of claims 1 to 11, wherein the battery cell comprises a first gasket, and the first gasket is arranged between the first extending portion and the insulating and sealing structure.

13. The battery cell according to any one of claims 1 to 12, wherein the battery cell comprises a second gasket, the second gasket is arranged between the insulating and sealing structure and a surface of one side of the first shell wall towards the first extending portion, and the material hardness of the second gasket is lower than that of the second part.

14. The battery cell according to any one of claims 1 to 13, wherein the terminal forms the first extending portion through flanging and riveting.

15. The battery cell according to any one of claims 1 to 14, wherein the passing portion and the first extending portion form a first terminal portion, the insulating and sealing structure comprises a first insulating and sealing element fitted between the first terminal portion and the first shell wall, and the first insulating and sealing element consists of the first part and the second part.

16. The battery cell according to claim 15, wherein the terminal further comprises a second extending portion connected with the passing portion and extending in a direction far away from a central axis of the installing hole relative to the passing portion, the second extending portion and the first extending portion respectively extend to the inside and outside of the first shell wall, the passing portion and the second extending portion form a second terminal portion, and the insulating and sealing structure comprises a second insulating and sealing element fitted between the second terminal portion and the first shell wall and arranged in a manner of being split from the first insulating and sealing element.

17. The battery cell according to claim 16, wherein the terminal comprises a terminal body and a terminal cover plate, the terminal body comprises the first terminal portion and the second terminal portion, the first extending portion extends to the outside of the outer surface of the first shell wall, the terminal cover plate covers one side of the first terminal portion far away from the second terminal portion, the terminal body is connected with the terminal cover plate through welding, and the material hardness of the second insulating and sealing element is lower than that of the second part.

18. The battery cell according to claim 17, wherein the outer side of the first extending portion towards the first shell wall protrudes out of the passing portion so as to define a sinking groove between the first extending portion and the passing portion, an edge of the terminal cover plate is arranged in the sinking groove, and is welded in a penetrating manner with the passing portion, and a welding structure formed through welding is separated from the first extending portion.

19. The battery cell according to any one of claims 1 to 18, wherein an accommodating cavity is formed by the battery cell at an inner side of the first shell wall, the terminal comprises a terminal body, an accommodating groove open in a direction far away from the accommodating cavity is formed in the terminal body, a communication hole is formed in the terminal body, and the communication hole penetrates through a groove wall of one side of the accommodating groove near the accommodating cavity, and connects the accommodating cavity and the accommodating groove.

20. The battery cell according to claim 19, wherein the battery cell comprises a battery cell assembly, the battery cell assembly comprises an active material coating portion accommodated in the accommodating cavity and a conduction portion connected with the active material coating portion, and the conduction portion is arranged in the communication hole in a penetrating manner to be at least partially accommodated in the accommodating groove.

21. The battery cell according to any one of claims 19 to 20, wherein the terminal comprises the terminal cover plate covering the terminal body, a liquid filling hole capable of being communicated with the accommodating groove is formed on the terminal cover plate, and the battery cell further comprises a sealing structure for sealing the liquid filling hole.

22. A battery, comprising the battery cell according to any one of claims 1 to 21.

23. An electric device, comprising the battery according to claim 22.
